# EUROPÄISCHE PATENTSCHRIFT

(11) **EP 1 593 454 B1**
(45) Veröffentlichungstag und Bekanntmachung des Hinweises auf die Patenterteilung: **11.06.2008**
(21) Anmeldenummer: 04027165.2
(22) Anmeldetag: 16.11.2004
(51) Int. Cl.: B23Q 1/00, B23B 31/00, B23Q 11/10

(54) **Schnellwechseleinsatz für Werkzeuge, insbesondere für Gewindebohrer**
Quick-change holder for tools, especially for screw taps
Mandrin à action rapide pour outils, spécialement pour des tarauds

(30) Priorität: 29.04.2004 DE 102004021082
(43) Veröffentlichungstag der Anmeldung: 09.11.2005
(73) Patentinhaber: Bilz Werkzeugfabrik GmbH & Co. KG, 73760 Ostfildern (DE)
(72) Erfinder: Voss, Michael, 71229 Leonberg (DE); Babel, Gerhard, 73666 Baltmannsweiler (DE)
(74) Vertreter: Kratzsch, Volkhard

(56) Entgegenhaltungen:
- EP-A- 0 956 919
- EP-A- 1 393 852
- US-A- 2 470 218

## Beschreibung

Die Erfindung bezieht sich auf einen Schnellwechseleinsatz für Werkzeuge, insbesondere für Gewindebohrer, mit den Merkmalen im Oberbegriff des Anspruchs 1.

Es ist ein Wechseleinsatz für Werkzeuge bekannt (EP A-1 393 852), der in einer mit einem Innengewinde versehenen Aufnahme eines Einsatzkörpers einen darin axial beweglichen, radial zentrierten Hauptkörper aufweist, an dem am dem eingesetzten Werkzeug zugewandten Ende ein Anschlagkörper mittels Gewinde befestigt ist. Der Hauptkörper mit daran befestigtem Anschlagkörper ist mittels einer in die Aufnahme eingeschraubten Gewindemutter in einer Richtung axial abgestützt. Durch die Gewindemutter hindurch ragt ein mit dem Futter fest verbundenes Rohr in den Hauptkörper hinein. Das Innere des Rohres, des Hauptkörpers und des Anschlagkörpers bilden einen Schmiermittelkanal, durch den ein Schmiermittel hindurch geleitet wird. Der Anschlagkörper enthält einen zentralen Durchlass für das Schmiermittel, der sich zu dem dem eingesetzten Werkzeug zugewandten Ende hin verjüngt und dort in eine zentrale Auslassbohrung überleitet, die im Durchmesser noch weiter reduziert ist. In den Einsatzkörper ist ein das Werkzeug enthaltendes Spannfutter mit einem Einsteckkonus einsteckbar, wobei das Werkzeug mit einem Ende axial am Anschlagkörper anschlagen soll und eine Längsbohrung im Inneren des Werkzeuges zur Schmiermittelführung mit der Auslassbohrung des Anschlagkörpers kommunizieren kann. Die Gewindemutter mit dem Hauptkörper und dem Anschlagkörper bildet eine Axialabstützung in einer Achsrichtung. Der Anschlagkörper ist darüber axial fixiert und in Axialrichtung nicht anpassbar. Er dient als rückseitiger Anschlag für das Werkzeug. Mittels der Gewindemutter ist der Hauptkörper mit Anschlagkörper in Längsrichtung einstellbar, wobei zur Änderung der Längsposition des Werkzeugs der komplette Einsatzkörper aus dem Futterkörper herausgenommen werden muss. Danach wird die Gewindemutter, nachdem das Werkzeug entfernt oder in Längsrichtung versetzt worden ist, in geeigneter Weise innerhalb des Gewindes gedreht, und zwar derart, dass die Position des Anschlagkörpers relativ zum Einsatzkörper eingestellt ist. Danach wird das Werkzeug am Einsatzkörper so fixiert, dass das rückwärtige Ende des Werkzeuges die vordere Endfläche des Anschlagkörpers berührt. Danach wird der Einsatzkörper wieder in den Futterkörper eingesetzt. Man erkennt, dass zur axialen Veränderung eine Demontage des Wechseleinsatzes und Einstellung durch Schraubverstellung der Gewindemutter erforderlich ist. Vom Anschlagkörper wird kein axialer Druck auf das Ende des Werkzeuges ausgeübt. Der Anschlagkörper hat kein axiales Anpassungsvermögen, so dass für einen Werkzeugwechsel eine umständliche, zuvor beschriebene Prozedur notwendig ist.

Ferner ist ein Schnellwechseleinsatz bekannt (EP 0 956 919 B1), der in einem Gewindeschneidfutter für Minimalmengenschmierung, und zwar in einer Einsatzhülse dieses Futters, aufnehmbar ist. Das Gewindeschneidfutter ist für Minimalmengenschmierung ausgelegt und dazu mit einem achszentralen Schmiermittelkanal zur Verbindung der Einsatzhülse mit einer maschinenseitigen Minimalschmierquelle versehen, von der das Schmiermittel als Aerosol zur Längsbohrung des Werkzeugs geführt wird. Der Schmiermittelkanal weist im Einmündungsbereich in die Einsatzhülse des Futters ein axial verschiebbares Kühlmittelrohr auf, das einen direkten Anschluss an die Längsbohrung des Werkzeugs herstellt. Das Kühlmittelrohr ist einteilig durchgehend vom Schmiermittelzuführkanal des Futters bis hin zum Gewindebohrer verlaufend in der Einsatzhülse des Futters verschiebbar unter dem einwirkenden Druck des Aerosols und/oder einer axial wirkenden Feder und wird dadurch unabhängig von der Axialposition des Werkzeugs in eine Eingriffstellung mit diesem, und zwar in die Längsbohrung des Werkzeugs, gedrückt. Aufgrund der axialen Verschiebbarkeit des Kühlmittelrohres im Futter bis hin zum Schnellwechseleinsatz und zum rückwärtigen Ende des Werkzeugs passt sich das Kühlmittelrohr an unterschiedlich lange rückwärtige Enden der Werkzeuge an. Derartige Gewindeschneidfutter haben aber nur eine begrenzte Anpassungsmöglichkeit an unterschiedlich lange Schaftenden von Werkzeugen und an unterschiedlich lange Schnellwechseleinsätze.

Der Erfindung liegt die Aufgabe zugrunde, eine Minimalmengenschmierung von Werkzeugen, insbesondere Gewindebohrern, die mittels Schnellwechseleinsätzen in Gewindeschneidfuttern zu haltern sind, mit beliebig langen Schnellwechseleinsätzen zu realisieren und hierbei die Spannsicherheit im Bereich der Schnellwechseleinsätze zu erhöhen.

Die Aufgabe ist bei einem Schnellwechseleinsatz der eingangs genannten Art gemäß der Erfindung durch die Merkmale im Anspruch 1 gelöst. Weitere besondere Erfindungsmerkmale sowie Ausgestaltungen dazu ergeben sich aus den darauf folgenden Ansprüchen.

Dadurch, dass der Schnellwechseleinsatz in einer rückwärtigen Aufnahme seines Einsatzkörpers mit einem einen zentralen Durchlass enthaltenden Dichtkörper versehen ist, der die Verbindung zwischen dem futterseitigen Schmiermittelkanal und der Längsbohrung des jeweiligen im Schnellwechseleinsatz gehaltenen Werkzeugs herstellt, ist in einfacher Weise eine zentrale, geschlossene und dichte Durchführung von Schmiermittel in Form eines Aerosols vom Futter bis hin zum Werkzeug geschaffen, wobei unterschiedlich langen rückwärtigen Enden von Werkzeugen durch die selbsttätige Anpassung des Dichtkörpers bereits im Schnellwechseleinsatz Rechnung getragen ist. Bedarfsweise können unterschiedlich dimensionierte Schnellwechseleinsätze bereitgehalten werden, die in ein und dasselbe Futter passen, jedoch eine innere Anpassung an verschieden lange rückwärtige Enden aufzunehmender Werkzeuge ermöglichen. Durch die Erfindung ist eine Vereinfachung und Reduzierung des Aufwands erreicht. Durch das federelastische Anpressen des Dichtkörpers an das Schaftende des Werkzeugs wird durch den Dichtkörper zugleich die Klemmung des Werkzeugs im Schnellwechseleinsatz und dadurch die Spannsicherheit erhöht.

Weitere Einzelheiten und Vorteile der Erfindung ergeben sich aus der nachfolgenden Beschreibung.

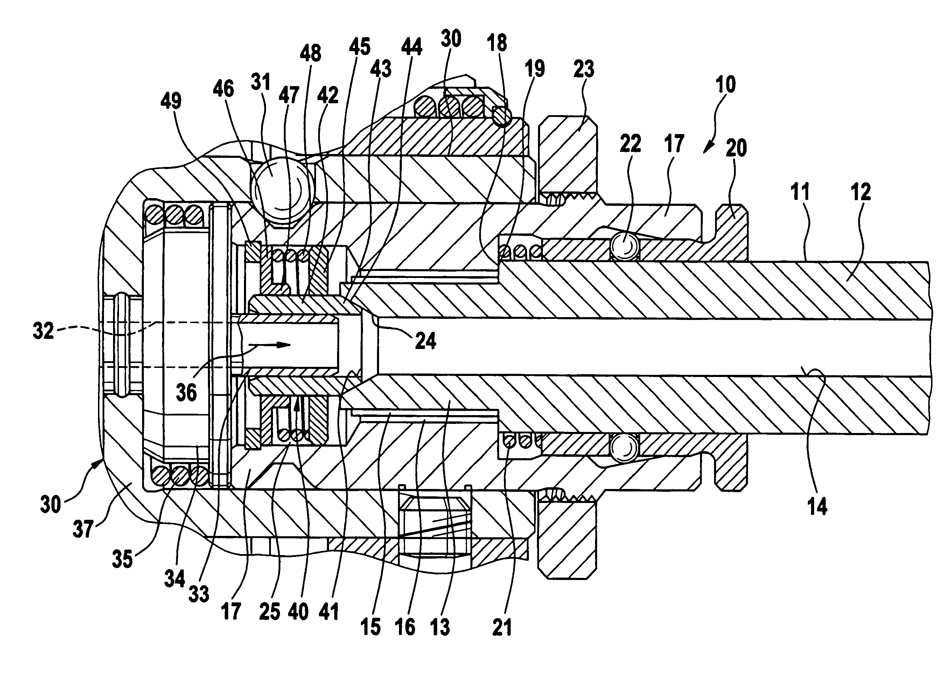

Der vollständige Wortlaut der Ansprüche ist vorstehend allein zur Vermeidung unnötiger Wiederholungen nicht wiedergegeben, sondern statt dessen lediglich durch Hinweise auf die Ansprüche darauf Bezug genommen, wodurch jedoch alle diese Anspruchsmerkmale als an dieser Stelle ausdrücklich und erfindungswesentlich offenbart zu gelten haben. Dabei sind alle in der vorstehenden und folgenden Beschreibung erwähnten Merkmale sowie auch die aus der Zeichnung entnehmbaren Merkmale weitere Bestandteile der Erfindung, auch wenn sie nicht besonders hervorgehoben und insbesondere nicht in den Ansprüchen erwähnt sind.

Die Erfindung ist nachfolgend anhand eines in der Zeichnung gezeigten Ausführungsbeispieles näher erläutert. Die Zeichnung zeigt einen schematischen axialen Schnitt eines Schnellwechseleinsatzes für Werkzeuge, der in ein nur zum Teil gezeigtes Futter eingesetzt ist.

Der dargestellte Schnellwechseleinsatz 10 enthält ein Werkzeug 11, insbesondere einen Gewindebohrer 12, der mit seinem rückwärtigen Ende 13 voran in den Schnellwechseleinsatz 10 axial eingesteckt ist und eine Längsbohrung 14 für den Durchlass eines Schmiermittels insbesondere in Form eines Aerosols enthält. Das Werkzeug 11 ist mit einem endseitigen Vierkant 15 versehen und über diesen in einer entsprechenden Vierkantaufnahme 16 eines Einsatzkörpers 17 des Schnellwechseleinsatzes 10 drehmomentübertragend aufgenommen. Mit einer Ringschulter 18 liegt das Werkzeug 11 axial an einer entsprechenden Fläche 19 des Einsatzkörpers 17 an. Eine am in der Zeichnung rechten Ende des Einsatzkörpers 17 aufgenommene Kugelhülse 20 wird mittels einer Feder 21 in der Zeichnung nach rechts gedrückt derart, dass die in der Kugelhülse 20 enthaltenen Kugeln 22 über sich in der Zeichnung nach rechts verjüngende Konusflächen 23 radial nach innen und auf die äußere Umfangsfläche des Werkzeugs 11 gepresst werden, wodurch dieses axial verliersicher im Schnellwechseleinsatz 10 gehalten ist.

Der Schnellwechseleinsatz 10 ist in einem Futter 30 auswechselbar aufgenommen und mittels Kugeln 31 gehalten. Das Futter 30 ist ebenso wie der Schnellwechseleinsatz 10 für Minimalmengenschmierung ausgebildet und enthält einen zentralen Schmiermittelkanal 32, über den das Schmiermittel als Aerosol, das z.B. von einer nicht gezeigten Maschinenspindel aus zugeführt wird, durch das Futter 30 hindurch geführt wird. Teil des Schmiermittelkanals 32 ist ein sichtbarer futterseitiger Rohrteil 33. Dieser Rohrteil 33 ist durch einen schematisch angedeuteten Auswerfer 34 geführt, der von einer Feder 35 in Richtung des Pfeiles 36 beaufschlagt ist. Der Schnellwechseleinsatz 10 trägt einen Haltering 23.

Der Schnellwechseleinsatz 10 ist zur lösbaren Aufnahme im Futter 30 und zur Einleitung des über den Schmiermittelkanal 32 geführten Aerosols vom Schmiermittelkanal 32 in die im Bereich des rückwärtigen Endes 13 mündende Längsbohrung 14 des Werkzeugs 11 ausgebildet, wobei die Längsbohrung 14 im rückwärtigen Ende 13 in eine Erweiterung 24 ausmündet, die sich entgegen dem Pfeil 36 etwa kegelstumpfförmig erweitert. In diesem Bereich, der dieser Erweiterung 24 benachbart ist, weist der Einsatzkörper 17 eine etwa ringförmige Aufnahme 25 auf. In dieser rückwärtigen Aufnahme 25 des Einsatzkörpers 17 ist ein Dichtkörper 40 angeordnet, der mit einem zentralen Durchlass 41 versehen ist. Dabei ist der Dichtkörper 40 derart angeordnet, dass dieser bei eingesetztem Werkzeug 11 und bei Aufnahme im Futter 30 den Schmiermittelkanal 32 und die Längsbohrung 14 des Werkzeugs 11 zumindest im wesentlichen dicht verbindet. Diese Verbindung erfolgt im übrigen so, dass dabei nur geringe Durchmesseränderungen auf dem Weg des Aerosols vom Schmiermittelkanal 32 durch den Dichtkörper 40 bis zur Längsbohrung 14 vorliegen.

Der Dichtkörper 40 ist in der Aufnahme 25 des Einsatzkörpers 17 axial beweglich gehalten, insbesondere axial verschiebbar geführt. Der Dichtkörper 40 weist eine Hülse 42 auf und ist insoweit z.B. als zylindrischer Rohrteil ausgebildet, wobei der Durchlass 41 als durchgängige Axialbohrung ausgebildet ist, deren Durchmesser kleiner oder etwa gleich dem Durchmesser der Längsbohrung 14 des Werkzeugs 11 ist. Ist der Schnellwechseleinsatz 10 so, wie in der Zeichnung gezeigt, in das Futter 30 eingesteckt und betriebsfertig darin aufgenommen, so ist der Dichtkörper 40 auf einem Längenabschnitt seines Durchlasses 41 von dem futterseitigen Rohrteil 33 durchsetzt, der beim Einstecken des Schnellwechseleinsatzes 10 in diesen Durchlass 41 eingreift. Der Dichtkörper 40 ist mit demjenigen Hülsenende 43, das dem rückwärtigen Ende 13 des Werkzeugs 11 zugewandt ist, mit diesem Ende des Werkzeugs 11 in Kontakt bringbar, und zwar entweder mit einer werkzeugseitigen Stirnfläche, was nicht gezeigt ist, oder statt dessen mit der Konusfläche der Erweiterung 24 am Schaftende des Werkzeugs 11. In Anpassung daran weist das Hülsenende 43 eine etwa kegelstumpfförmige Außenfläche 44 auf.

Der Dichtkörper 40, insbesondere dessen Hülse 42, weist einen radial überstehenden, damit einstückigen Ringteil 45 auf, der innerhalb der Aufnahme 25 zur Zentrierung des Dichtkörpers 40 dienen kann. Zur axialen Führung des Dichtkörpers 40 ist ferner in der Aufnahme 25 des Einsatzkörpers 17 ein Führungsteil 46 gehalten, der als Ring mit einer zentralen Führungshülse 47 ausgebildet ist. Die Führungshülse 47 ist auf dem Dichtkörper 40, insbesondere der Hülse 42, verschiebbar angeordnet und von dieser durchsetzt.

Der Dichtkörper 40 ist federelastisch an das zugewandte Schaftende des Werkzeuges 11 anpressbar und dann, wenn ein Werkzeug 11, wie gezeigt, eingesetzt ist, angepresst. Hierzu dient mindestens eine axial wirkende Feder 48, z.B. in Form einer zylindrischen Schraubenfeder. Die Feder 48 ist mit einem Ende in Bezug auf den Einsatzkörper 17 abgestützt und beaufschlagt mit ihrem anderen Ende den Dichtkörper 40 in Richtung des Pfeiles 36, das heißt in Richtung auf das Schaftende des Werkzeugs 11. Beim gezeigten Ausführungsbeispiel ist die Feder 48 einerseits am Ringteil 45 und andererseits am Führungsteil 46 abgestützt, wobei der Führungsteil 46 seinerseits über ein Sicherungsmittel 49, z.B. einen Sicherungsring, am Einsatzkörper 17 axial abgestützt ist. Durch das Anpressen des Dichtkörpers 40 an das Schaftende des Werkzeugs 11 wird die Klemmkraft der Kugeln 22 erhöht, was besonders bei Vibrationen des Werkzeugs 11 und bei Hartmetallschäften des Werkzeugs eine höhere Spannsicherheit gewährleistet.

Der Schnellwechseleinsatz 10 bildet in Bezug auf das Futter 30 ein auswechselbares eigenes Bauteil. Ist in den Schnellwechseleinsatz 10 kein Werkzeug 11 eingesteckt, wird der Dichtkörper 40 mittels der Feder 48 in Pfeilrichtung 36 soweit verschoben, bis der Dichtkörper 40 mit dem Ringteil 45 am in der Zeichnung rechten Ende der inneren Aufnahme 25 des Einsatzkörpers 17 anschlägt. Der Dichtkörper 40 ist somit im Einsatzkörper 17 unverlierbar gehalten. Wird ein Werkzeug 11, z.B. Gewindebohrer 12, mit seinem Schaft in den Schnellwechseleinsatz 10 eingesteckt, so gelangt dessen umgekehrt etwa kegelstumpfförmige Erweiterung 24 am Ende der Längsbohrung 14 in Kontakt mit der etwa kegelstumpfförmigen Außenfläche 44 am Hülsenende 43, wobei beim weiteren Einschieben des Werkzeugs 11 in den Einsatzkörper 17 der Dichtkörper 40 entgegen dem Pfeil 36 und der Wirkung der Feder 48 in der Zeichnung nach links verschoben wird, z.B. soweit, bis die Ringschulter 18 an der Fläche 19 anschlägt. Das eingesteckte Werkzeug 11 ist sodann mittels der Kugeln 22 der Kugelhülse 20 axial unverlierbar im Schnellwechseleinsatz 10 gehalten, wobei die Drehmomentübertragung über den Vierkant 15 und die Vierkantaufnahme 16 erfolgen können. Wird der Schnellwechseleinsatz 10 sodann in das Futter 30 eingebracht, wird der Einsatzkörper 17 vom Futterkörper 37 aufgenommen und darin mittels der Kugeln 31 verriegelt. Dabei greift der Rohrteil 33 in den Durchlass 41 des Dichtkörpers 40 axial ein. Die Feder 35 des Auswerfers 34 wird entsprechend zusammengedrückt.

Soll der Schnellwechseleinsatz 10 aus dem Futter 30 herausgenommen werden, so werden in üblicher Weise die Kugeln 31 freigegeben, so dass diese ausrasten. Über die sich entspannende Feder 35 und den Auswerfer 34 wird der Schnellwechseleinsatz 10 zumindest geringfügig in Richtung des Pfeiles 36 ausgestoßen und kann sodann aus dem Futterkörper 37 entnommen werden. Zum Entnehmen des Werkzeugs 11 wird die Kugelhülse 20 entgegen dem Pfeil 36 soweit eingedrückt, dass deren Kugeln 22 radial auswandern können, wodurch diese das Werkzeug 11 freigeben, das sodann herausgezogen werden kann. Dabei wird der Dichtkörper 40 unter der Wirkung der Feder 48 in Richtung des Pfeiles 36 in die Ausgangslage verschoben.

Der Schnellwechseleinsatz 10 kann Werkzeuge 11 mit unterschiedlich langen Vierkanten 15 aufnehmen, wobei aufgrund der Anfederung des Dichtkörpers 40 dieser unter entsprechendem axialen Ausgleich mittels der Feder 48 mit der Außenfläche 44 an die umgekehrt etwa kegelstumpfförmige Erweiterung 24 des Werkzeugs 11 dicht angepresst wird. Dadurch wird ein dichter Übergang mit nur minimaler Durchmesseränderung vom Schmiermittelkanal 32, auch im Rohrteil 33, zum Durchlass 41 und von diesem zur Längsbohrung 14 des Werkzeugs 11 erreicht. Damit wird der Forderung Rechnung getragen, dass das bei der Minimalmengenschmierung als Schmiermittel dienende Aerosol möglichst geradlinig bei möglichst konstantem Durchmesser der hindurchleitenden Kanäle in das Werkzeug 11 und durch das Werkzeug 11 hindurchgeführt werden muss. Von Vorteil ist auch, dass das Aerosol direkt in die Längsbohrung 14 des Werkzeugs 11 eingeleitet wird und nicht erst in den Bereich der Aufnahme 25 eingeleitet werden muss. Der Dichtkörper 40 dient somit einerseits zur möglichst dichten Hindurchleitung des Aerosols mit axialem Anpassungsvermögen und erfüllt zum anderen zugleich die Funktion eines entsprechenden axialen Leitelements.

## Patentansprüche

1. Schnellwechseleinsatz für Werkzeuge, insbesondere für Gewindebohrer, für Minimalmengenschmierung, der zur lösbaren Aufnahme in einem mit einem zentralen Schmiermittelkanal (32) versehenen Futter (30) und zur Einleitung des Schmiermittels als Aerosol vom Schmiermittelkanal (32) in das rückwärtige Ende einer Längsbohrung (14) eines eingesetzten Werkzeugs (11), insbesondere Gewindebohrers (12), ausgebildet ist und in einer rückwärtigen Aufnahme (25) des Einsatzkörpers (17) einen mit einem zentralen Durchlass versehenen, eine Hülse (42) aufweisenden Dichtkörper (40) enthält, der beim Einsetzen des Werkzeuges (11) und bei Aufnahme im Futter (30) mit dem einen Hülsenende (43), das dem rückwärtigen Ende (13) des Werkzeugs (11) zugeordnet ist, mit dem Werkzeug (11) in Kontakt bringbar ist und den Schmiermittelkanal (32) und die Längsbohrung (40) des Werkzeugs (11) zumindest im wesentlichen dicht miteinander verbindet,
**dadurch gekennzeichnet,**
**dass** der Dichtkörper (40) in der Aufnahme (25) axial verschiebbar geführt und an das Schaftende des Werkzeugs (11) federelastisch anpressbar ist mittels zumindest einer Feder (48), die mit einem Ende in Bezug auf den Einsatzkörper (17) abgestützt ist und mit ihrem anderen Ende den Dichtkörper (40) in Richtung auf das Schaftende des Werkzeugs (11) beaufschlagt.

2. Schnellwechseleinsatz nach Anspruch 1,
**dadurch gekennzeichnet,**
**dass** das eine Hülsenende (43) eine etwa kegelstumpfförmige Außenfläche (44) aufweist und in eine entsprechend umgekehrt etwa kegelstumpfförmige Erweiterung (24) des rückwärtigen Endes der Längsbohrung (14) des Werkzeugs (11) hinein bewegbar ist.

3. Schnellwechseleinsatz nach Anspruch 1 oder 2,
**dadurch gekennzeichnet,**
**dass** die Hülse (42) als zylindrischer Rohrteil ausgebildet ist.

4. Schnellwechseleinsatz nach einem der Ansprüche 1 bis 3,
**dadurch gekennzeichnet,**
**dass** in der Aufnahme (25) des Einsatzkörpers (17) ein Führungsteil (46) gehalten ist, mittels dessen die Hülse (42) axial verschiebbar geführt ist.

5. Schnellwechseleinsatz nach Anspruch 4,
**dadurch gekennzeichnet,**
**dass** der Führungsteil (46) eine in der Aufnahme (25) des Einsatzkörpers (17) radial zentrierte Führungshülse (47) aufweist, die auf der Hülse (42) angeordnet und von dieser durchsetzt ist.

6. Schnellwechseleinsatz nach einem der Ansprüche 1 bis 5,
**dadurch gekennzeichnet,**
**dass** die Hülse (42) einen radial überstehenden Ringteil (45) aufweist, der innerhalb der Aufnahme (25) des Einsatzkörpers (17) zur Zentrierung dient.

7. Schnellwechseleinsatz nach einem der Ansprüche 4 bis 6,
**dadurch gekennzeichnet,**
**dass** die mindestens eine Feder (48) am Führungsteil (46) und dieser über ein Sicherungsmittel (49), z. B. einen Sicherungsring, am Einsatzkörper (17) axial abgestützt ist.

8. Schnellwechseleinsatz nach einem der Ansprüche 1 bis 7,
**dadurch gekennzeichnet,**
**dass** die Hülse (42) als Durchlass (41) eine durchgängige Axialbohrung enthält und dass der Durchlass (41) hinsichtlich des Durchlassquerschnitts, insbesondere des Durchmessers, kleiner oder etwa gleich dem Durchmesser der Längsbohrung (14) des Werkzeugs (11) ist.

9. Schnellwechseleinsatz nach einem der Ansprüche 1 bis 8,
**dadurch gekennzeichnet,**
**dass** die Hülse (42) bei Aufnahme im Futter (30) auf einem Längsabschnitt ihres Durchlasses (41) von einem futterseitigen Rohrteil (33) des Schmiermittelkanals (32) durchsetzbar ist.

## Claims

1. Quick-change insert for tools, especially for screw taps, for minimum quantity lubrication, which is designed for releasably accommodating in a chuck (30) provided with a central lubricant passage (32) and for introducing the lubricant as an aerosol from the lubricant passage (32) into the rear end of a longitudinal bore (14) of an inserted tool (11), especially a screw tap (12), and contains, in a rear receptacle (25) of the insert body (17), a sealing body (40) which is provided with a central passage and has a sleeve (42) and, with inserted tool (11) and when accommodated in the chuck (30), can be brought with the one sleeve end (43) assigned to the rear end (13) of the tool (11) into contact with the tool (11) and connects the lubricant passage (32) and the longitudinal bore (14) of the tool (11) to one another at least essentially in a tight manner, **characterized in that** the sealing body (40) is guided in the receptacle (25) in an axially displaceable manner and can be pressed elastically against the shank end of the tool (11) by means of at least one spring (48) which is supported with one end with respect to the insert body (17) and acts with its other end on the sealing body (40) in the direction of the shank end of the tool (11).

2. Quick-change insert according to Claim 1, **characterized in that** the one sleeve end (43) has an approximately frustoconical outer surface (44) and can be moved into a correspondingly inversely approximately frustoconical widened portion (24) of the rear end of the longitudinal bore (14) of the tool (11).

3. Quick-change insert according to Claim 1 or 2, **characterized in that** the sleeve (42) is designed as a cylindrical tube part.

4. Quick-change insert according to one of Claims 1 to 3, **characterized in that** a guide part (46) is held in the receptacle (25) of the insert body (17), by means of which guide part (46) the sleeve (42) is guided in an axially displaceable manner.

5. Quick-change insert according to Claim 4, **characterized in that** the guide part (46) has a guide sleeve (47) which is radially centred in the receptacle (25) of the insert body (17) and is arranged on the sleeve (42), which passes through said guide sleeve (47).

6. Quick-change insert according to one of Claims 1 to 5, **characterized in that** the sleeve (42) has a radially projecting annular part (45) which serves for centring inside the receptacle (25) of the insert body (17).

7. Quick-change insert according to one of Claims 4 to 6, **characterized in that** the at least one spring (48) is axially supported on the guide part (46) and the latter is axially supported on the insert body (17) via a retaining means (49), e.g. a retaining ring.

8. Quick-change insert according to one of Claims 1 to 7, **characterized in that** the sleeve (42) contains as passage (41) an axial through-bore and **in that** the passage (41), with regard to the passage cross section, in particular the diameter, is smaller than or approximately equal to the diameter of the longitudinal bore (14) of the tool (11).

9. Quick-change insert according to one of Claims 1 to 8, **characterized in that** a chuck-side tube part (33) of the lubricant passage (32) can pass through the sleeve (42) over a longitudinal section of its passage (41) when said sleeve (42) is accommodated in the chuck (30).

## Revendications

1. Insert pour changement rapide d'outils, notamment pour tarauds, pour une quantité de lubrification minimale, qui est réalisé pour être reçu de manière desserrable dans un mandrin (30) pourvu d'un canal de lubrifiant central (32) et pour introduire le lubrifiant sous forme d'aérosol depuis le canal de lubrifiant (32) dans l'extrémité arrière d'un alésage longitudinal (14) d'un outil inséré (11), notamment un taraud (12), et qui contient, dans un logement arrière (25) du corps d'insert (17), un corps d'étanchéité (40) présentant une douille (42) et muni d'un passage central, lequel corps d'étanchéité peut être amené en contact avec l'outil (11), lors de l'insertion de l'outil (11) et lors de sa réception dans le mandrin (30), par l'une des extrémités de la douille (43) qui est associée à l'extrémité arrière (13) de l'outil (11), et qui relie le canal de lubrifiant (32) et l'alésage longitudinal (14) de l'outil (11) au moins de manière essentiellement étanche l'un à l'autre,
**caractérisé en ce que**
le corps d'étanchéité (40) est guidé de manière à pouvoir coulisser axialement dans le logement (25) et peut être pressé de manière élastique à ressort contre l'extrémité de la tige de l'outil (11), au moyen d'au moins un ressort (48), qui est supporté par une extrémité par rapport au corps d'insert (17), et qui sollicite avec son autre extrémité le corps d'étanchéité (40) dans la direction de l'extrémité de la tige de l'outil (11).

2. Insert pour changement rapide d'outils selon la revendication 1,
**caractérisé en ce que**
l'une des extrémités de la douille (43) présente une surface extérieure approximativement tronconique (44) et peut être déplacée dans un élargissement (24) de forme approximativement tronconique inversée correspondante de l'extrémité arrière de l'alésage longitudinal (14) de l'outil (11).

3. Insert pour changement rapide d'outils selon la revendication 1 ou 2,
**caractérisé en ce que**
la douille (42) est réalisée sous forme de pièce tubulaire cylindrique.

4. Insert pour changement rapide d'outils selon l'une quelconque des revendications 1 à 3,
**caractérisé en ce**
**qu'**une pièce de guidage (46) est maintenue dans le logement (25) du corps d'insert (17), au moyen de laquelle la douille (42) est guidée de manière à pouvoir coulisser axialement.

5. Insert pour changement rapide d'outils selon la revendication 4,
**caractérisé en ce que**
la pièce de guidage (46) présente une douille de guidage (47) centrée radialement dans le logement (25) du corps d'insert (17), laquelle est disposée sur la douille (42) et est traversée par celle-ci.

6. Insert pour changement rapide d'outils selon l'une quelconque des revendications 1 à 5,
**caractérisé en ce que**
la douille (42) présente une partie annulaire saillant radialement (45), qui sert au centrage à l'intérieur du logement (25) du corps d'insert (17).

7. Insert pour changement rapide d'outils selon l'une quelconque des revendications 4 à 6,
**caractérisé en ce que**
l'au moins un ressort (48) est supporté sur la pièce de guidage (46) et celle-ci est supportée axialement par le biais d'un moyen de fixation (49), par exemple une bague de fixation, sur le corps d'insert (17).

8. Insert pour changement rapide d'outils selon l'une quelconque des revendications 1 à 7,
**caractérisé en ce que**
la douille (42) présente, en tant que passage (41), un alésage axial traversant et **en ce que** le passage (41) a une section transversale de passage, notamment un diamètre, qui est plus petit(e) ou approximativement égal(e) au diamètre de l'alésage longitudinal (14) de l'outil (11).

9. Insert pour changement rapide d'outils selon l'une quelconque des revendications 1 à 8,
**caractérisé en ce que**
la douille (42), lors de sa réception dans le mandrin (30) sur une portion longitudinale de son passage (41), peut être traversée par une pièce tubulaire (33), côté mandrin, du canal de lubrifiant (32).
